# EUROPEAN PATENT APPLICATION

(11) **EP 4 484 150 A1**
(43) Date of publication of application: **01.01.2025**
(21) Application number: 23182926.8
(22) Date of filing: 30.06.2023
(51) Int. Cl.: B32B 1/00, B32B 17/10, C03C 17/36

(54) **GLAZING WITH SOLAR CONTROL CAPABILITIES**

(71) Applicant: AGP Worldwide Operations GmbH, 6300 Zug (CH)
(72) Inventor: KRASNOV, Alexey, Canton, Michigan, 48188 (US); GOSSEN, Stefan, 52070 Aachen (DE); SANGLIKAR, Ruturaj Shrinivas, 52070 Aachen (DE); ROJAS VALLE, Merlyn, 15081 Cercado de Lima, Lima (PE); VINATEA CHÁVEZ, Camilo Jorge, 15081 Cercado de Lima, Lima (PE); BENITO GUTIERREZ, Guillermo, 9881 Bellem, Alter (BE)
(74) Representative: ABG Intellectual Property Law, S.L.

(57) **Abstract**

The invention falls in the field of automotive glazing and relates to a glazing for a vehicle with a solar control coating. The invention also relates to a roof, backlite, rear quarter, sidelite or sidedoor comprising said glazing and to a vehicle comprising said glazing.

## Description

### FIELD OF THE INVENTION

The invention falls in the field of automotive glazing and relates to a glazing for a vehicle with a solar control coating. The invention also relates to a roof, backlite, rear quarter, sidelite or sidedoor comprising said glazing and to a vehicle comprising said glazing.

### BACKGROUND OF THE INVENTION

A trend that has been growing in automotive design over the last several years has been an increase in the total area of the glazing. The increase in glazed area is often accompanied by a reduction in vehicle weight due to the displacement of heavier materials. This has been a key part of the automotive industry's strategy to meet regulatory requirements for higher fleet fuel efficiency as well as customer demand for more environmentally friendly vehicles. Also, as automotive interiors have been getting smaller, the glazed area has been increased in an effort to offset the claustrophobic effect that can result from a reduction in cabin volume. The increase in vision area and natural light tends to make the cabin feel more open and airy. As a result, large panoramic glass roofs have become a popular option on many models. The increase in glazed area, however, also increases the solar load on the vehicle if conventional glazing is used. This may require a high-capacity air conditioning unit, which increases weight and reduces fuel efficiency. However, it is possible to reduce the solar load through the use of solar control glazing. By reducing the solar load on the vehicle, significant improvements in energy consumption can be made. This is especially important for electric vehicles, where the improvement directly translates into an increase in the mileage range of the vehicle, which is a key customer concern.

Traditional laminated glazing sunroofs use silver-inclusive solar control coatings on the inner surface of the outer glass layer, or optionally on the inner surface of the inner glass layer, to limit solar radiation into the vehicle. Solar control coatings use infrared (IR) reflective coatings that are designed to allow visible light to pass through while reflecting solar infrared radiation back into the environment, thus allowing the cabin to stay cooler. Examples of such solar control coatings include double- (Ag2) and triple- (Ag3) silver coatings. Silver (Ag) is most commonly used for this application due to its high optical transmittance in the visible range, high reflectance in the near-IR, and its relatively neutral color. Additional layers may be used, such as anti-reflective dielectric layers, which are generally metal oxides selected to minimize visible reflectance and enhance visible transmittance.

At the same time, in electric vehicles, cold weather can significantly reduce the vehicle's range due to the need to heat the cabin. Therefore, it is crucial to insulate the passenger compartment, particularly as the glazed area of the cabin has increased, leading to thermal losses. This is also vital for driver and passenger comfort, especially when there is a cold glass roof overhead or other glazing part in close proximity to exposed skin.

Thermal energy is transferred from the environment to the glass by means of convection and radiation i.e. direct solar light, then through the glass by means of conduction, and, finally, from the glass to the cabin by re-radiation and convection. The heat transfer between the glass and the cabin is governed by the emissivity, a measure of how much energy a surface radiates, quantified as the ratio of the heat emitted by an object to that of a perfect black body. Standard clear soda-lime glass has an emissivity of 0.84, radiating 84% of the heat absorbed, making it a poor thermal insulator.

While solar control techniques aim to reduce the transmission of solar energy through a glass article into an enclosed space like a building or a vehicle interior, low-E (low emissivity) techniques focus on decreasing the transmission of energy from the inside of a building or a vehicle to the outside. To enhance thermal properties, solar control coatings can be combined with low-E coatings based on Transparent Conductive Oxides (TCO), such as indium-tin-oxide (ITO) coatings. These coatings are ideally placed on the outer surface of the inner glass layer of the laminated glazing, which is the face of the inner glass layer oriented towards the interior of the vehicle in the operating position of the glazing when installed in a vehicle. Low-E coatings drastically reduce the amount of thermal radiant heat energy emitted by a glass article, which is the main component of glass heat transfer.

In combination with a low-E coating (typically ITO based) on the outer surface of the inner glass layer, silver-based solar-control coatings allow total solar transmission (TTS) levels of about 19% for Ag2 and 13-14% for Ag3, as well as providing high visible light transmission (TL).

However, for many applications, high levels of light transmission are becoming less important. When silver-based coatings are used on the inner surface of the outer glass layer or on the inner surface of the inner glass layer, special measures, such as the use of a grey glass or dark PVB are typically required to lower the total light transmission level of the entire laminated glazing.

There are also multiple problems when using Ag-based solar control coatings, such as those listed as follows:
- The performance of Ag-based solar control coatings (reflective and transmitted color, TTS, sheet resistance, etc.) is sensitive to process conditions, thus making it difficult to keep the required tolerances.
- Ag-based solar control coatings have an appreciable yield loss due to adhesion and other problems that often occur during high temperature bending and handling or processing.
- Ag-based solar control coatings require the use of fresh glass with surfaces free of stains and other defects.
- Glass coated with Ag-based solar control coatings has a short shelf time before lamination to avoid the Ag degradation.
- Ag is known as the weakest link in the Ag-based solar control glazing. Delamination of the entire laminated stack often occurs at a silver interface, resulting in loose shards of glass. This is a potential problem for safety issues.
- Ag-based solar control coatings require special solutions for low-transmission sunroofs, e.g., the use of absorbing PVBs, grey or dark glass, etc. These additional requirements increase the product cost.
- Ag-based solar control coatings typically result in a broad distribution of the angular dependence of reflected color and intensity, which is undesirable in some applications, such as automotive roofs.

Therefore, there is a need for a glazing with solar control capabilities that overcomes, or at least reduces, the problems associated with Ag-based solar control coatings.

### DESCRIPTION OF THE INVENTION

The present invention provides a solution to the aforementioned issues by a glazing according to claim 1, a roof, backlite, rear quarter, sidelite or sidedoor according to claim 15, and a vehicle according to claim 16. In dependent claims, preferred embodiments of the invention are defined.

In a first inventive aspect, the present invention provides a glazing with solar control capabilities for a vehicle, the glazing comprising:
- a first glass layer having an outer major surface and an inner major surface, wherein the outer major surface is opposite to the inner major surface;
- a second glass layer having an inner major surface and outer major surface, wherein the inner major surface is opposite to the outer major surface;
- at least one plastic bonding layer arranged between the inner major surface of the first glass layer and the inner major surface of the second glass layer; and
- a solar control coating arranged between the inner major surface of the first glass layer and the at least one plastic bonding layer, on at least one portion of the inner major surface of the first glass layer;
wherein the solar control coating comprises:
- a first electrically conductive layer having a thickness in the range of 1 to 40 nm; the first electrically conductive layer comprising any of the following materials: metal, metal alloy, semiconductor material or a combination thereof;
- a first separation layer arranged between the first electrically conductive layer and the first glass layer; the first separation layer having an extinction coefficient of at least 0.01 and an optical thickness within the range of 0,3 to 1,9 times the quarter wavelength optical thickness of the material it is made of; and
- a second electrically conductive layer arranged between the first glass layer and the first separation layer; the second electrically conductive layer having a thickness in the range of 1 to 30 nm; the second electrically conductive layer comprising any of the following materials: metal, metal alloy or semiconductor material or a combination thereof; and
wherein the glazing has a total solar transmission no greater than 21%.

The glazing of the present invention comprise a first glass layer and a second glass layer. In some embodiments, the glazing further comprises one or more additional glass layers. The glazing is laminated.

The first glass layer has an outer major surface and an inner major surface. Similarly, the second glass layer has an inner major surface and an outer major surface. The inner major surface of the first glass layer is arranged facing the inner major surface of the second glass layer. In an operating position of the glazing, with the glazing mounted as part of a vehicle, the outer major surface of the first glass layer is the surface of the glazing facing the exterior of the vehicle and the outer major surface of the second glass layer is the surface of the glazing facing the interior of the vehicle.

At least one plastic bonding layer is arranged between the inner major surface of the first glass layer and the inner major surface of the second glass layer to keep the glass layers bonded. Preferably, the material selected for the at least one plastic bonding interlayer is a polymer, preferably a thermoplastic polymer, and more preferably a clear thermoset plastic, such as polyvinyl butyral (PVB). Additionally, ethylene vinyl acetate (EVA) or thermoplastic polyurethane (TPU) may be used as bonding layers.

The glazing comprises a solar control coating arranged on at least one portion of the inner major surface of the first glass layer. In an embodiment, the solar control coating is arranged on substantially the whole inner major surface of the first glass layer.

The solar control coating comprises a first electrically conductive layer, a first separation layer arranged between the first electrically conductive layer and the first glass layer and a second electrically conductive layer arranged between the first glass layer and the first separation layer. Thus, in an operating position of the glazing, with the glazing mounted as part of a vehicle, the order of the layers of the solar control coating from the interior of the vehicle to the exterior is as follows: the first electrically conductive layer, the first separation layer and the second electrically conductive layer.

The second electrically conductive layer reduces the total solar transmission and the first electrically conductive layer counteracts a high interior reflectance caused by the second electrically conductive layer. The solar control coating operates in such a way that when a light wave coming from the interior side of the glazing (i.e. in automotive applications, the interior side corresponds to the side facing the interior of the vehicle in the operative position of the glazing) is incident on the coating, the light wave firstly interacts with the first electrically conductive layer. Part of the light wave (R1) is reflected backwards from the first electrically conductive layer and another part of the light wave passes through the first electrically conductive layer and also through the first separation layer until it reaches the second electrically conductive layer. When the light wave has passed the first separation layer, its phase is shifted. Part of the light wave (R2) that is incident on the second electrically conductive layer is reflected backwards from the second electrically conductive layer. Therefore, the reflected light waves R1 and R2 are phase shifted from each other.

Due to the combined features of the first and second electrically conductive layers and the first separation layer, the light wave (R1) reflected from the first electrically conductive layer and the second light wave (R2) reflected from the second electrically conductive layer are phase shifted, so that the first and second reflected light waves R1 and R2 are out of phase and cancel each other out due to destructive optical interference. When two optical waves come together, they interact, and their amplitudes may either be added - if, e.g., the crests of the waves are aligned- or subtracted from each other. In the latter case, if the crests are shifted to be completely out of phase, the interference is called destructive, and if the amplitudes are equal in values, the waves will cancel each other. The total intensity in this case comes to zero. In optical terms, this means that there is no reflection. Destructive optical interference allows to counteract the high reflectivity of the first and second electrically conductive layers. A solar control is provided by the first and second electrically conductive layers, while the provision of the first separation layer in combination with the first and second electrically conductive layers provides reflectivity control.

The first separation layer allows adjustment of the constructive and destructive optical interference of electromagnetic radiation partially reflected from, or partially transmitted by, the various interface boundaries of the layers of the solar control coating. Varying the thickness and/or composition of the first separation layer may change the overall reflectance, transmittance, and/or absorptance of the solar control coating, which can alter the solar control performance, thermal infrared insulating performance, color, and/or aesthetics of the solar control coating. Additionally, the first separation layer provides chemical and/or mechanical protection for other layers of the solar control coating, such as the first and second electrically conductive layers.

The invention provides a glazing with a solar control coating that is silver-free, cost-effective and mechanically and chemically robust (the solar control coating is insensitive to delamination and has a longer shelf time before the lamination compared to Ag-based coatings).

Also, the solar control coating of the glazing of the invention provides sufficiently low (16-19%) total solar transmission (TTS) and low (0-15%) visible light transmission (TL), making it especially suitable for roofs, sidelites, and/or rear quarter windows where low levels of visible transmission are required.

The following terminology is used along the whole document to describe features of the invention.

The term "glazing" should be understood as a product comprising at least one layer of a transparent or substantially transparent material, preferably glass, which serves to provide for the transmission of light and/or to provide for viewing of the side opposite to the viewer and which is intended to be mounted in an opening in a building, vehicle, wall or roof or other framing member or enclosure.

The term "layer", as used in this context, shall include the common definition of the word, i.e.: a sheet, quantity, or thickness, of material, typically of some homogeneous substance.

The term "glass" can be applied to many organic and inorganic materials. From a scientific standpoint, "glass" is defined as a state of matter comprising a non-crystalline amorphous solid that lacks the long-range ordered molecular structure of true solids. Glasses have the mechanical rigidity of crystals with the random structure of liquids. The types of glass that may be used include but are not limited to the common soda-lime variety typical of automotive glazing as well as aluminosilicate, lithium aluminosilicate, borosilicate, glass ceramics, and the various other inorganic solid amorphous compositions which undergo a glass transition and are classified as glass. The glass layers may comprise heat absorbing glass compositions as well as infrared reflecting and other types of coatings.

"Laminates", in general, are products that comprise multiple sheets of thin, relative to their length and width, material, with each thin sheet having two oppositely disposed major surfaces, typically of a relatively uniform thickness, which are permanently bonded together across at least one major surface of each sheet.

The term "stack" refers to the arrangement in a pile manner of a plurality of layers.

With respect to a second layer located on a first layer, the term "on" should be understood as including both the option of the first and second layers being in direct contact (i.e. physical contact) and the option of having one or more additional layers located between the first layer and the second layer.

The term "optical thickness" means the geometric thickness of the material multiplied by the refractive index of the material at a provided reference wavelength, which in the case of the case of the present invention is 550 nm. For example, a material having a geometric thickness (also called physical thickness) of 5 nm and a refractive index of 2.0 at a reference wavelength of 550 nm would have an optical thickness of 10 nm.

Thickness values, unless indicated to the contrary, are geometric thickness values.

The terms "index of refraction", "refractive index" (or "refraction index"), or its acronym "RI" are synonyms and may be used interchangeably. It should be understood as a dimensionless number that gives the indication of the light bending ability of that medium (i.e. the material). The refractive index determines how much the path of light is bent, or refracted, when entering a material. The refractive index may vary with wavelength. This causes white light to split into constituent colors when refracted. This is called dispersion. Light propagation in absorbing materials can be described using a complex-valued refractive index. The imaginary part then handles the attenuation, while the real part accounts for refraction. For most materials, the refractive index changes with wavelength by several percent across the visible spectrum. Refractive indices for materials are commonly reported using a single value. In the case of the present invention, the refractive index is provided at a wavelength reference of 550 nm.

As has already been mentioned, the term "emissivity" or its acronym "ε" is a measure of how much thermal radiation a material's surface, such as an automotive glass roof, emits to its environment. Thermal radiation is electromagnetic radiation that may include both visible radiation (light) and infrared radiation, which is not visible to the human eye. Thermal radiation from very hot objects, for example, is easily visible to the human eye. Quantitatively, emissivity is the ratio of the thermal radiation from a surface to the radiation from an ideal black surface at the same temperature, as given by the Stefan-Boltzmann law. This characteristic is unitless and ranges between 0 and 1. It is inversely proportionate to the sheet resistance of a low-E coating. Low-E should be understood as below or equal to 0.3, and preferably below or equal to 0.2.

The extinction coefficient determines how strongly a material absorbs or reflects light. It is often written as Im(ni) - the imaginary part of the complex refractive index (ni) - and is used together with the Re(ni) - the real part of the complex refractive index - as a set of optical constants, also called index dispersions, specific to each material. In the present application, the extinction coefficient should be understood as calculated at a reference wavelength of 550 nm.

Among the elements of a valuable appearance is the color of, for example, a vehicle roof laminate. Color can be described mathematically. CIELAB is one of the many color spaces or chromaticities and is normally used in the automotive and architectural industries. The advantage of the CIELAB is that color shifts on the CIELAB diagram are perceived proportionally by the human eye. The CIELAB L*, a*, b* color space mathematically describes all perceivable colors in three dimensions: L* for perceptual lightness, a* for green-red, and b* for blue-yellow. See Hunter Lab, Applications Note, "Insight on Color," Vol. 8, No. 7 (2008). In the CIELAB color space, the L* axis runs from top to bottom. The maximum L* value is 100, which indicates a perfect reflecting diffuser (i.e., the lightest white). The minimum L* value is 0, which indicates a perfect absorber (i.e., the darkest black). Positive a* is red. Negative a* is green. Positive b* is yellow. Negative b* is blue. CIELAB a* or b* values equal to 0 indicate no red-green or blue-yellow color appearance, in which case the article would appear neutral, ranging, depending on the L*, from black, to gray, to white. In contrast, a* or b* values that deviate from 0 indicate that light is spectrally non-uniformly absorbed or reflected. As a* or b* values deviate from 0, the color may no longer appear as neutral. One of the most important attributes of the CIELAB model is device independence, which means that colors are defined independently of their nature of creation or the device on which they are displayed.

The L*, a*, and b* values of the CIELAB color scale can be obtained using any CIELAB color measurement instrument and are calculated from known formulas. See Hunter Lab, Applications Note, "Insight on Color," Vol. 8, No. 7 (2008).

Thus, the uniqueness of the CIELAB space is in its perceived uniformity. A change in the numerical difference between two color coordinates is proportionate difference in the color perceived by the human eye.

The terms "metal" and "metal alloy" include the traditionally recognized metals and metal alloys.

In the context of the present invention, the term "total solar transmission (TTS)" should be understood as the percentage of incident solar radiation transmitted by the laminate, which includes the direct solar transmission plus the part of the solar absorption that is re-radiated inwards. That is, TTS means the ratio, expressed as a percent, of the amount of solar energy that passes through the glazing (including the energy that is absorbed and subsequently re-radiated to the interior) to the total amount of thermal energy that is supplied to the glazing from the environment. The rest of the thermal energy is rejected without being re-radiated. The TTS of a glazing is measured in accordance with the ISO 13837.

When a range of values is provided in the application, it should be understood that the two limiting values of the range are also included. For example, if a range of 20 to 100 nm is provided, the values 20 and 100 nm are also included within the range.

The glazing and/or the solar control coating may include one or more additional layers to further improve the color and/or intensity of transmitted and/or reflected light for light incoming from the exterior and/or the interior of the vehicle when the glazing is in an operating position.

In an embodiment, the first separation layer has an optical thickness within a preferred range of 0,45 to 1,65 times the quarter wavelength optical thickness of the material it is made of, preferably within the range of 0,85 to 1,15 times the quarter wavelength optical thickness of the material it is made of, more preferably within the range of 0,90 to 1,10 times, and even more preferably within the range of 0,95 to 1,05 times the quarter wavelength optical thickness of the material it is made of.

In an embodiment, the solar control coating further comprises a second separation layer arranged between the first electrically conductive layer and the at least one plastic bonding layer, wherein the second separation layer has an optical thickness within the range of 0,45 to 1,65 times the quarter wavelength optical thickness of the material it is made of.

In an embodiment, the solar control coating further comprises a third electrically conductive layer arranged between the second separation layer and the at least one plastic bonding layer, so that the second separation layer is arranged between the first electrically conductive layer and the third electrically conductive layer; wherein the third electrically conductive layer has a thickness in the range of 1 to 30 nm, preferably in the range of 1 to 15 nm.

In an embodiment having a second separation layer and a third electrically conductive layer, when the glazing is in an operating position mounted as part of a vehicle, the group of layers closer to the first glass layer of the glazing (i.e. comprising the first electrically conductive layer, the first separation layer and the second electrically conductive layer) mainly controls the exterior reflected intensity and color, while the group of layers being placed closer to the second glass layer of the glazing (i.e. comprising the second separation layer and the third electrically conductive layer) mainly controls the interior reflected intensity and color.

In an embodiment, the second separation layer has an optical thickness within the range of 0,85 to 1,15 times the quarter wavelength optical thickness of the material it is made of, preferably within the range of 0,90 to 1,10 times, more preferably within the range of 0,95 to 1,05 times the quarter wavelength optical thickness of the material it is made of.

In an embodiment, the glazing has a total solar transmission no greater than 18%, and preferably no greater than 16%.

In an embodiment, the solar control coating further comprises at least one dielectric layer arranged between the second electrically conductive layer and the inner major surface of the first glass layer.

The at least one dielectric layer advantageously acts as a Na diffusion blocking layer.

In an embodiment, the at least one dielectric layer comprises one or more Si-based materials, such as SiNx, SiOx, SiOxNy, and/or a material selected from: ZnAlOx, NiCrOx, NbOx, TiOx, ZnSnOx, ZnTiOx, ZnZrOx, ZrTiOx, SiZrOx, SiZrTiOx, or any combination thereof.

In an embodiment, the glazing comprises a low-emissivity coating arranged on the outer major surface of the second glass layer. The low-emissivity coating are preferably ITO based. The main function of the low-E coating is to ensure a sufficient reduction of the total TTS, together with the first, second and/or third electrically conductive layer of the solar control coating. The low-E coating also ensures a low emissivity of the laminated glazing.

In an embodiment, the first, second and/or third electrically conductive layer comprises a metal, an alloy and/or a semiconductor selected from the following list: NiCr, a Ni-based alloy, a Cr-based alloy, Al, Ti, an Al-based allow, a Ti-based alloy, and any combination thereof.

The first, second and/or third electrically conductive layers can be made of a single material or be a combination of several layers made of different materials.

An example of an NiCr alloy is a 50/50 Ni/Cr ratio, but can range from 5/95 to 95/5 wt%.

In an embodiment, the solar control coating further comprises at least one color correction control layer, wherein:
- the at least one color correction control layer is arranged between the first separation layer and the second electrically conductive layer or between the first electrically conductive layer and the second separation layer;
- the at least one color correction control layer has a thickness in the range of 1 to 10 nm; and/or
- the at least one color correction control layer comprises a material selected from the group comprising: SiAl, TiNx, and any combination thereof.

Advantageously, this embodiment enables improved color control for both exterior and interior reflected light.

In an embodiment, the first and/or second separation layer comprises at least one of the following:
- a sub-oxidized dielectric material, such as SiOx, SiOxNy, NbOx, TiOx, SiTiOx, and SrTiOx,
- a sub-stoichiometric nitride, such as SiNx, and/or
- a semiconductor, such as NiCrOx, NiOx, Inconel, and ZrOx.

In an embodiment, the solar control coating further comprises a third separation layer between the third electrically conductive layer and the plastic bonding layer.

In an embodiment, the third separation layer has an optical thickness within the range of 0,45 to 1,65 times the quarter wavelength optical thickness of the material it is made of.

In an embodiment, the third separation layer has an optical thickness within the range of 0,85 to 1,15 times the quarter wavelength optical thickness of the material it is made of, preferably within the range of 0,90 to 1,10 times, more preferably within the range of 0,95 to 1,05 times the quarter wavelength optical thickness of the material it is made of.

In an embodiment, the first and/or second and/or third separation layer has a physical thickness within the range of 20 to 70 nm, preferably 30 to 60 nm.

In an embodiment, the first glass layer and/or the second glass layer is alkali aluminosilicate glass, soda lima clear glass, soda lime ultra-clear glass, solar green glass or borosilicate glass.

In an embodiment, the at least one plastic bonding layer comprises an infrared light protection composition and/or has a visible light transmission of at least 2%.

In an embodiment, the glazing is curved.

In a second inventive aspect, the invention provides a roof, backlite, rear quarter, sidelite or sidedoor for a vehicle, comprising at least one glazing according to any one of the embodiments of the first inventive aspect.

In a third inventive aspect, the invention provides a vehicle comprising at least one glazing according to any one of the embodiments of the first inventive aspect or a roof, backlite, rear quarter, sidelite or sidedoor according to any one of the embodiments of the second inventive aspect.

The glazing is arranged in the vehicle with the first glass layer adjacent the exterior of the vehicle and the outer major surface of the second glass layer facing the interior of the vehicle.

The term "vehicle" in the present invention includes, but is not limited to, road vehicles (e.g. cars, busses, trucks, agricultural and construction vehicles, cabin motorbikes), railway vehicles (e.g. locomotives, coaches), aircraft (e.g. airplanes, helicopters), boats, ships and the like. For instance, the vehicle may be a road vehicle and more particularly a car.

All features described in this specification, including the claims, description and drawings, can be combined in any way except for combinations of mutually exclusive features.

### DESCRIPTION OF THE DRAWINGS

These and other features and advantages of the invention will be seen more clearly from the following detailed description of preferred embodiments provided only by way of illustrative and non-limiting examples in reference to the attached drawings.
Figure 1 shows a side view (not to scale) of a glazing according to an embodiment of the present invention.
Figure 2 shows a side view (not to scale) of a glazing according to an embodiment of the present invention.
Figure 3 shows a side view (not to scale) of a glazing according to an embodiment of the present invention.
Figure 4 shows a side view (not to scale) of a glazing according to an embodiment of the present invention.
Figure 5 shows a side view (not to scale) of a glazing according to an embodiment of the present invention.
Figure 6 shows a side view (not to scale) of a glazing according to an embodiment of the present invention.
Figure 7 shows a side view (not to scale) of a glazing according to an embodiment of the present invention.
Figure 8 shows a side view (not to scale) of a glazing according to an embodiment of the present invention.
Figures 9 to 13 show the angular dependence of the T, Rint, and Rext colors for glazing according to several examples of the present invention.

### DETAILED DESCRIPTION OF THE INVENTION

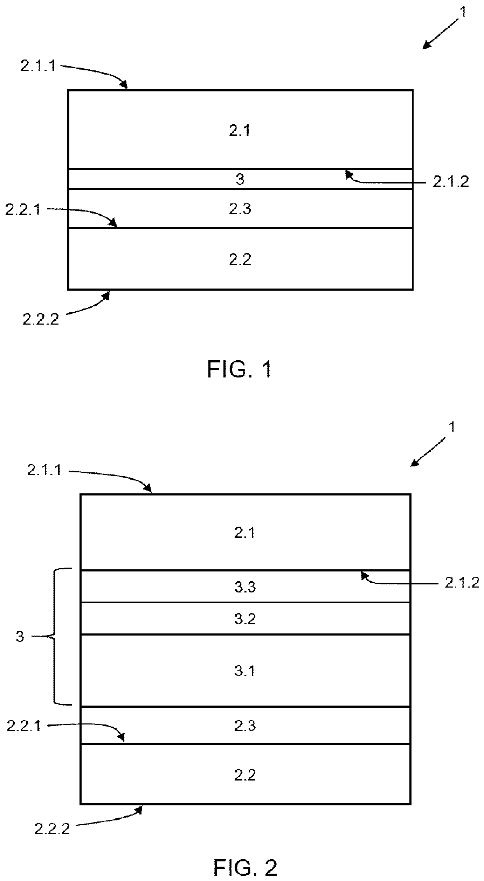

The present invention defines a glazing (1) with solar control capabilities for a vehicle, the glazing (1) comprising a first glass layer (2.1), a second glass layer (2.2), at least one plastic bonding layer (2.3) and a solar control coating (3). This is schematically shown in Figure 1.

The first glass layer (2.1) has an outer major surface (2.1.1) and an opposed inner major surface (2.1.2). Similarly, the second glass layer (2.2) has an inner major surface (2.2.1) and an opposed outer major surface (2.2.2). The first glass layer (2.1) and the second glass layer (2.2) are arranged with their inner major surfaces facing each other.

The plastic bonding layer (2.3) is arranged between the inner major surface (2.1.2) of the first glass layer (2.1) and the inner major surface (2.2.1) of the second glass layer (2.2).

The solar control coating (3) is arranged between the inner major surface (2.1.2) of the first glass layer (2.1) and the plastic bonding layer (2.3), on at least one portion of the inner major surface (2.1.2) of the first glass layer (2.1).

Although not shown in Figure 1, the solar control coating (3) comprises a first electrically conductive layer (3.1), a first separation layer (3.2) and a second electrically conductive layer (3.3). This is shown in Figure 2, wherein the layers of the solar control coating (3) are schematically depicted.

The first separation layer (3.2) is arranged between the first electrically conductive layer (3.1) and the first glass layer (2.1). The second electrically conductive layer (3.3) is arranged between the first glass layer (2.1) and the first separation layer (3.2). In other words, from the first glass layer (2.1) to the second glass layer (2.2), the layers of the solar control coating are arranged as follows:
- second electrically conductive layer (3.3),
- first separation layer (3.2),
- first electrically conductive layer (3.1).

The first electrically conductive layer (3.1) has a thickness in the range of 1 to 40 nm and comprises any of the following materials: metal, metal alloy, semiconductor material or a combination thereof.

The first separation layer (3.2) has an extinction coefficient of at least 0.01 and an optical thickness within the range of 0,3 to 1,9 times the quarter wavelength optical thickness of the material it is made of.

The second electrically conductive layer (3.3) comprises any of the following materials: metal, metal alloy or semiconductor material or a combination thereof and has a thickness in the range of 1 to 30 nm.

The glazing (1) has a total solar transmission no greater than 21%.

In an embodiment, the first glass layer (2.1) and/or the second glass layer (2.2) is alkali aluminosilicate glass, soda lima clear glass, soda lime ultra-clear glass, solar green glass or borosilicate glass.

In an embodiment, the plastic bonding layer (2.3) comprises an infrared light protection composition and/or has a visible light transmission of at least 2%.

In an embodiment, the first (3.1) and/or second (3.3) electrically conductive layer comprises a metal, an alloy and/or a semiconductor selected from the following list: NiCr, a Ni-based alloy, a Cr-based alloy, Al, Ti, an Al-based allow, a Ti-based alloy, and any combination thereof.

In an embodiment, the first separation layer (3.2) has an optical thickness within the range of 0,45 to 1,65 times the quarter wavelength optical thickness of the material it is made of, preferably 0,85 to 1,15 times the quarter wavelength optical thickness of the material it is made of, more preferably within the range of 0,90 to 1,10 times, and even more preferably within the range of 0,95 to 1,05 times the quarter wavelength optical thickness of the material it is made of.

In an embodiment, the first separation layer (3.2) comprises at least one of the following materials:
- a sub-oxidized dielectric material, such as SiOx, SiOxNy, NbOx, TiOx, SiTiOx, and SrTiOx,
- a sub-stoichiometric nitride, such as SiNx, and/or
- a semiconductor, such as NiCrOx, NiOx, Inconel, and ZrOx.

In an embodiment, the glazing (1) has a total solar transmission no greater than 18%, and preferably no greater than 16%.

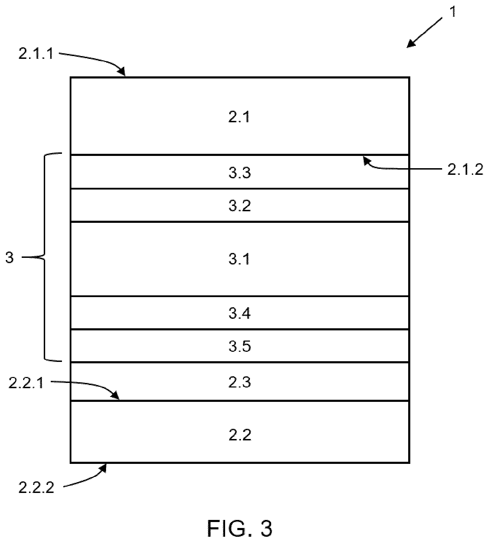

Figure 3 shows an embodiment of a glazing (1) according to the present invention. In the embodiment of Figure 3 the solar control coating (3) further comprises a second separation layer (3.4) and a third electrically conductive layer (3.5).

The second separation layer (3.4) is arranged between the first electrically conductive layer (3.1) and the at least one plastic bonding layer (2.3). The second separation layer (3.4) has an optical thickness within the range of 0,45 to 1,65 times the quarter wavelength optical thickness of the material it is made of.

The third electrically conductive layer (3.5) is arranged between the second separation layer (3.4) and the at least one plastic bonding layer (2.3), so that the second separation layer (3.4) is arranged between the first electrically conductive layer (3.1) and the third electrically conductive layer (3.5).

The third electrically conductive layer (3.5) has a thickness in the range of 1 to 30 nm, preferably in the range of 1 to 15 nm.

In an embodiment, the third electrically conductive layer (3.5) comprises a metal, an alloy and/or a semiconductor selected from the following list: NiCr, a Ni-based alloy, a Cr-based alloy, Al, Ti, an Al-based allow, a Ti-based alloy, and any combination thereof.

In an embodiment, the second separation layer (3.4) has an optical thickness within the range of 0,85 to 1,15 times the quarter wavelength optical thickness of the material it is made of, preferably within the range of 0,90 to 1,10 times, more preferably within the range of 0,95 to 1,05 times the quarter wavelength optical thickness of the material it is made of.

In an embodiment, the second separation layer (3.4) comprises at least one of the following materials:
- a sub-oxidized dielectric material, such as SiOx, SiOxNy, NbOx, TiOx, SiTiOx, and SrTiOx,
- a sub-stoichiometric nitride, such as SiNx, and/or
- a semiconductor, such as NiCrOx, NiOx, Inconel, and ZrOx.

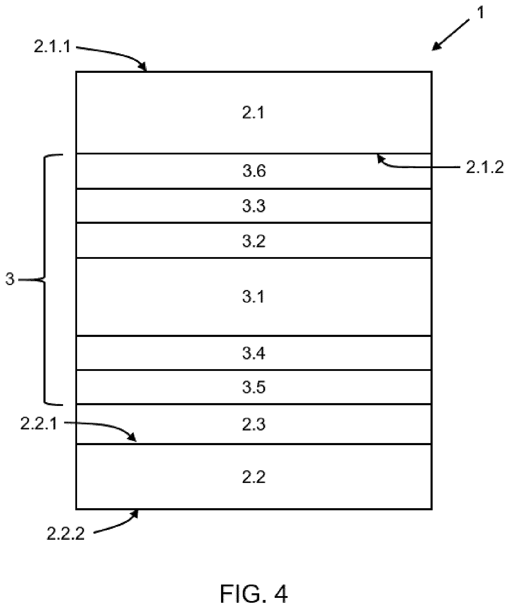

Figure 4 shows an embodiment of a glazing (1) according to the present invention. The embodiment of Figure 4 is similar to the one depicted in Figure 3, but the solar control coating (3) further comprises a dielectric layer (3.6) arranged between the second electrically conductive layer (3.3) and the inner major surface (2.1.2) of the first glass layer (2.1).

In an embodiment, the dielectric layer (3.6) comprises one or more Si-based materials, such as SiNx, SiOx, SiOxNy, and/or a material selected from: ZnAlOx, NiCrOx, NbOx, TiOx, ZnSnOx, ZnTiOx, ZnZrOx, ZrTiOx, SiZrOx, SiZrTiOx, or any combination thereof.

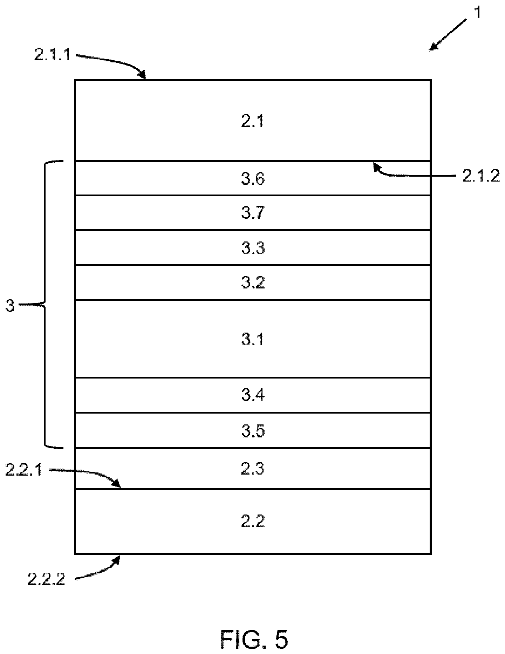

Figure 5 shows an embodiment of a glazing (1) according to the present invention. The embodiment of Figure 5 is similar to the one depicted in Figure 4, but the solar control coating (3) comprises a second dielectric layer (3.7) arranged between the first dielectric layer (3.6) and the second electrically conductive layer (3.3).

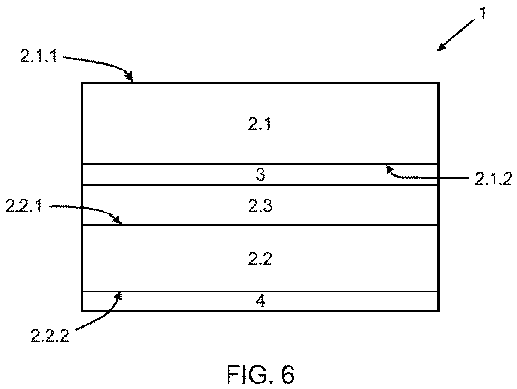

Figure 6 shows an embodiment of a glazing (1) according to the present invention. In the embodiment of Figure 6 the glazing (1) further comprises a low-emissivity coating (4) arranged on the outer major surface (2.2.2) of the second glass layer (2.2). The solar control coating (3) of the embodiment of Figure 6 can be according to any of the embodiments of the present invention.

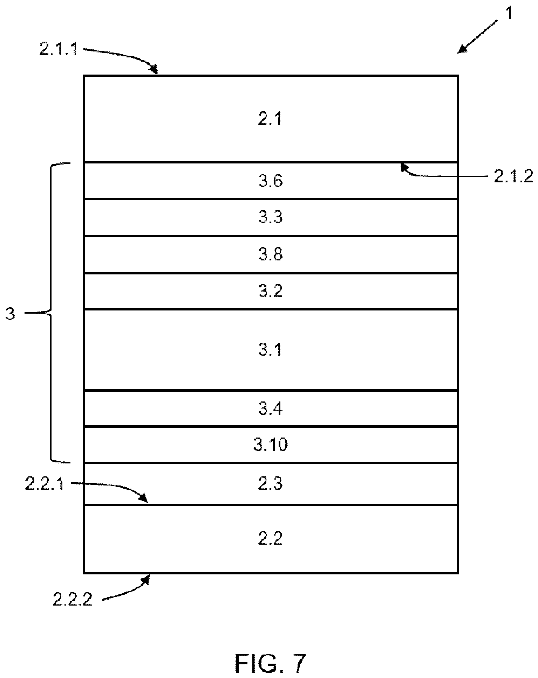

Figure 7 shows an embodiment of a glazing (1) according to the present invention. The glazing (1) comprises a first glass layer (2.1), a second glass layer (2.2), a plastic bonding layer (2.3) and a solar control coating (3). In this embodiment, further to the first (3.1) and second (3.3) electrically conductive layers and the first separation layer (3.2), the solar control coating (3) comprises a dielectric layer (3.6) arranged between the second electrically conductive layer (3.3) and the inner major surface (2.1.2) of the first glass layer (2.1).

The solar control coating (3) of Figure 7 further comprises a color correction control layer (3.8) arranged between the first separation layer (3.2) and the second electrically conductive layer (3.3). The color correction control layer (3.8) has a thickness in the range of 1 to 10 nm and comprises a material selected from the group comprising: SiAl, TiNx, and any combination thereof.

The solar control coating (3) of Figure 7 further comprises a second separation layer (3.4) arranged between the first electrically conductive layer (3.1) and the plastic bonding layer (2.3). The second separation layer (3.4) has an optical thickness within the range of 0,45 to 1,65 times the quarter wavelength optical thickness of the material it is made of.

Also, the solar control coating (3) of Figure 7 comprises a protective layer (3.10) arranged between the second separation layer (3.4) and the plastic bonding layer (2.3).

Thus, the glazing (1) of the embodiment of Figure 7 has the following arrangement of layer:
- a first glass layer (2.1),
- a solar control coating (3), comprising:
   - a dielectric layer (3.6),
   - a second electrically conductive layer (3.3),
   - a color correction control layer (3.8),
   - a first separation layer (3.2),
   - a first electrically conductive layer (3.1),
   - a second separation layer (3.4), and
   - a protective layer (3.10),
- a plastic bonding layer (2.3),
- a second glass layer (2.2).

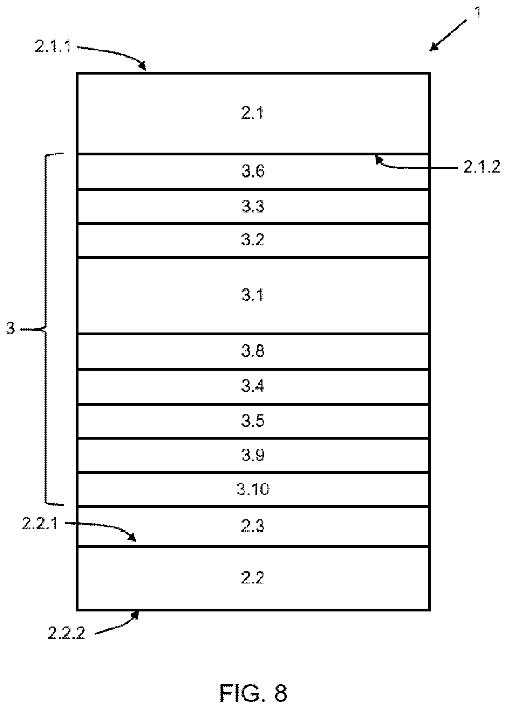

Figure 8 shows an embodiment of a glazing (1) according to the present invention. The glazing (1) comprises a first glass layer (2.1), a second glass layer (2.2), a plastic bonding layer (2.3) and a solar control coating (3). In this embodiment, further to the first (3.1) and second (3.3) electrically conductive layers and the first separation layer (3.2), the solar control coating (3) comprises a dielectric layer (3.6) arranged between the second electrically conductive layer (3.3) and the inner major surface (2.1.2) of the first glass layer (2.1).

The solar control coating (3) of Figure 8 further comprises a second separation layer (3.4) and a third electrically conductive layer (3.5) arranged between the first electrically conductive layer (3.1) and the plastic bonding layer (2.3). The second separation layer (3.4) has an optical thickness within the range of 0,45 to 1,65 times the quarter wavelength optical thickness of the material it is made of. The third electrically conductive layer (3.5) has a thickness in the range of 1 to 30 nm, preferably in the range of 1 to 15 nm.

The solar control coating (3) of Figure 8 further comprises a color correction control layer (3.8) arranged between the first electrically conductive layer (3.1) and the second separation layer (3.4). The at least one color correction control layer has a thickness in the range of 1 to 10 nm. The at least one color correction control layer comprises a material selected from the group comprising: SiAl, TiNx, and any combination thereof.

Also, the solar control coating (3) of Figure 8 comprises a third separation layer (3.9) and a protective layer (3.10) arranged between the third electrically conductive layer (3.5) and the plastic bonding layer (2.3).

In an embodiment, the third separation layer (3.9) has an optical thickness within the range of 0,45 to 1,65 times the quarter wavelength optical thickness of the material it is made of.

Thus, the glazing (1) of the embodiment of Figure 8 has the following arrangement of layers:
- a first glass layer (2.1),
- a solar control coating (3), comprising:
   - a dielectric layer (3.6),
   - a second electrically conductive layer (3.3),
   - a first separation layer (3.2),
   - a first electrically conductive layer (3.1),
   - a color correction control layer (3.8),
   - a second separation layer (3.4),
   - a third electrically conductive layer (3.5),
   - a third separation layer (3.9),
   - a protective layer (3.10),
- a plastic bonding layer (2.3),
- a second glass layer (2.2).

In an embodiment, the layers of the solar control coating and/or the layers of the low-E coating are deposited using a Physical-Vapor Deposition (PVD) method, such as Magnetron Sputtering Vapor Deposition (MSVD).

### EXAMPLES

### Example 1

Example 1 is an example of a glazing according to the invention. A side view of this glazing is depicted in Figure 7.

The glazing has the following arrangement of layers:
- a first glass layer of soda-lime Clear glass with a thickness of 2.1 mm,
- a solar control coating, comprising:
   - a dielectric layer of SiNx with a thickness of 18,9 nm,
   - a second electrically conductive layer (3.3) of NiCr with a thickness of 24,7 nm,
   - a color correction control layer of SiAl with a thickness of 5,5 nm,
   - a first separation layer of NbOx with a thickness of 59,5 nm,
   - a first electrically conductive layer of NiCr with a thickness of 9,1 nm,
   - a second separation layer of NbOx with a thickness of 46 nm, and
   - a protective layer of SiOx with a thickness of 15,5 nm,
- a plastic bonding layer of clear PVB with a thickness of 0,76 mm,
- a second glass layer of soda-lime Clear glass with a thickness of 1,6 mm, and
- a low-E coating comprising:
   - a dielectric layer of SiOx with a thickness of 8 nm,
   - a transparent conductive oxide layer of ITO with a thickness of 108,2 nm, and
   - a protective layer of SiOx with a thickness of 115,2 nm.

In this example, the second separation layer helps promoting destructive optical interference to reduce the effect of combined reflection of the first electrically conductive layer/second separation layer/protective layer portion of the stack.

The glazing of Example 1 has a visible light transmission (TL) of 6,4%, exterior reflectance (Rext) of 39%, interior reflectance (Rint) of 2% and total solar transmission (TTS) of 15,3%.

CIELAB color coordinates are:
CIELAB T(0°): L*=30.5; a*=-3.0; b*=-3.0
CIELAB Rext(0°): L*=69.5; a*=-0.5; b*=-3.4
CIELAB Rint(0°): L*=15.7; a*=0.0; b*=-3.9

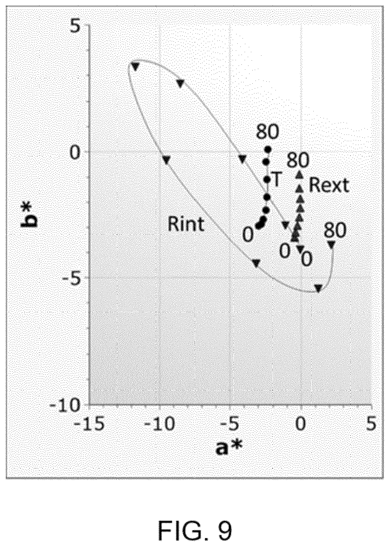

The angular dependence of the T, Rint, and Rext colors is depicted in Figure 9.

### Example 2

Example 2 is an example of a glazing according to the invention. Example 2 is similar to Example 1 but uses an additional color-control combination of layers to manage the exterior and interior color. A side view of this glazing is depicted in Figure 8.

The glazing has the following arrangement of layers:
- a first glass layer of soda-lime Clear glass with a thickness of 2.1 mm,
- a solar control coating, comprising:
   - a dielectric layer of SiNx with a thickness of 59 nm,
   - a second electrically conductive layer (3.3) of NiCr with a thickness of 3,5 nm,
   - a first separation layer of NbOx with a thickness of 34,3 nm,
   - a first electrically conductive layer of NiCr with a thickness of 28,4 nm,
   - a color correction control layer of SiAl with a thickness of 5,2 nm,
   - a second separation layer of NbOx with a thickness of 50,6 nm,
   - a third electrically conductive layer of NiCr with a thickness of 9,8 nm,
   - a third separation layer of NbOx with a thickness of 32,9 nm, and
   - a protective layer of SiOx with a thickness of 130,4 nm,
- a plastic bonding layer of clear PVB with a thickness of 0,76 mm,
- a second glass layer of soda-lime Clear glass with a thickness of 1,6 mm, and
- a low-E coating comprising:
   - a dielectric layer of SiOx with a thickness of 14,2 nm,
   - a transparent conductive oxide layer of ITO with a thickness of 102,1 nm, and
   - a protective layer of SiOx with a thickness of 130,4 nm.

In this example, the second separation layer helps promoting destructive optical interference to reduce the effect of combined reflection of the third electrically conductive layer/third separation layer/protective layer portion of the stack.

The glazing of Example 2 has a visible light transmission (TL) of 2,8%, exterior reflectance (Rext) of 19%, interior reflectance (Rint) of 5% and total solar transmission (TTS) of 18,4%. The glazing according to Example 2 provides a grey-bluish exterior color.

CIELAB color coordinates are:
CIELAB T(0°): L*=19.7; a*=-0.6; b*=-1.7
CIELAB Rext(0°): L*=60.0; a*=-5.5; b*=-4.0
CIELAB Rint(0°): L*=27.2; a*=0.4; b*=-4.4

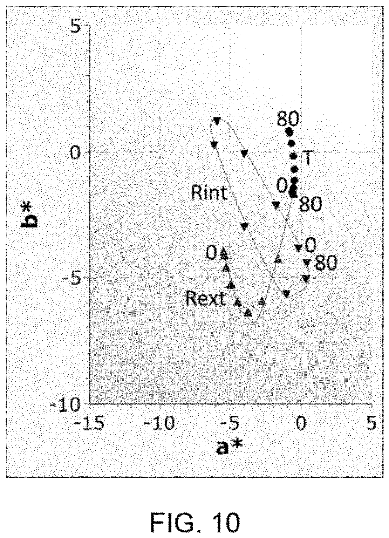

The angular dependence of the T, Rint, and Rext colors is depicted in Figure 10.

### Example 3

Example 3 is an example of a glazing according to the invention. Example 3 is similar to Example 1 but enables more neutral T(0°) and Rext(0°) colors. A side view of this glazing is depicted in Figure 7.

The glazing has the following arrangement of layers:
- a first glass layer of soda-lime Clear glass with a thickness of 2.1 mm,
- a solar control coating, comprising:
   - a dielectric layer of SiNx with a thickness of 21,53 nm,
   - a second electrically conductive layer (3.3) of NiCr with a thickness of 27,4 nm,
   - a color correction control layer of SiAl with a thickness of 6,9 nm,
   - a first separation layer of NbOx with a thickness of 56,5 nm,
   - a first electrically conductive layer of NiCr with a thickness of 8 nm,
   - a second separation layer of NbOx with a thickness of 51,3 nm,
   - a protective layer of SiOx with a thickness of 60 nm,
- a plastic bonding layer of clear PVB with a thickness of 0,76 mm,
- a second glass layer of soda-lime Clear glass with a thickness of 1,6 mm, and
- a low-E coating comprising:
   - a dielectric layer of SiOx with a thickness of 11,6 nm,
   - a transparent conductive oxide layer of ITO with a thickness of 108,1 nm, and
   - a protective layer of SiOx with a thickness of 116,2 nm.

The glazing of Example 3 has a visible light transmission (TL) of 5,4%, exterior reflectance (Rext) of 41,1%, interior reflectance (Rint) of 3,5% and total solar transmission (TTS) of 16%.

CIELAB color coordinates are:
CIELAB T(0°): L*=28.0; a*=-2.5; b*=-0.8
CIELAB Rext(0°): L*=70.0; a*=-0.9; b*=-0.5
CIELAB Rint(0°): L*=21.9; a*=0.1; b*=-0.6

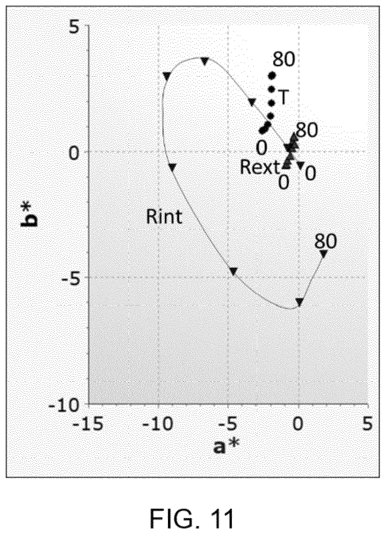

The angular dependence of the T, Rint, and Rext colors is depicted in Figure 11.

### Example 4

Example 4 is an example of a glazing according to the invention. Example 4 is similar to Example 2 but enables a bluish exterior color. A side view of this glazing is depicted in Figure 8.

The glazing has the following arrangement of layers:
- a first glass layer of soda-lime Clear glass with a thickness of 2.1 mm,
- a solar control coating, comprising:
   - a dielectric layer of SiNx with a thickness of 61,6 nm,
   - a second electrically conductive layer (3.3) of NiCr with a thickness of 4,2 nm,
   - a first separation layer of NbOx with a thickness of 45,3 nm,
   - a first electrically conductive layer of NiCr with a thickness of 23,6 nm,
   - a color correction control layer of SiAl with a thickness of 6,6 nm,
   - a second separation layer of NbOx with a thickness of 50,6 nm,
   - a third electrically conductive layer of NiCr with a thickness of 8,9 nm,
   - a third separation layer of NbOx with a thickness of 41,7 nm,
   - a protective layer of SiOx with a thickness of 18,4 nm,
- a plastic bonding layer of clear PVB with a thickness of 0,76 mm,
- a second glass layer of soda-lime Clear glass with a thickness of 1,6 mm, and
- a low-E coating comprising:
   - a dielectric layer of SiOx with a thickness of 15,5 nm,
   - a transparent conductive oxide layer of ITO with a thickness of 102,8 nm, and
   - a protective layer of SiOx with a thickness of 126,7 nm.

The glazing of Example 4 has a visible light transmission (TL) of 4%, exterior reflectance (Rext) of 14,1%, interior reflectance (Rint) of 3,1% and total solar transmission (TTS) of 17,9%.

CIELAB color coordinates are:
CIELAB T(0°): L*=23.5; a*=-0.3; b*=-3.3
CIELAB Rₑₓₜ(0°): L*=44.4; a*=-6.6; b*=1.8
CIELAB Rᵢₙₜ(0°): L*=20.9; a*=0.0; b*=-3.0

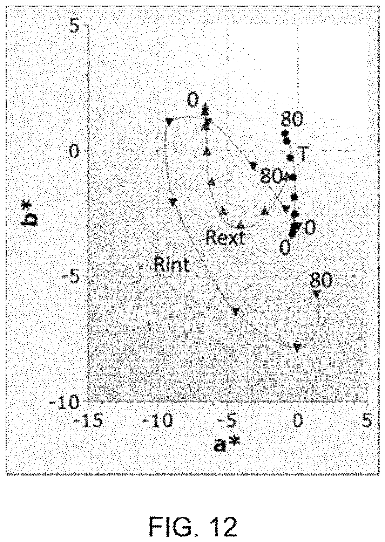

The angular dependence of the T, Rint, and Rext colors is depicted in Figure 12.

### Example 5

Example 5 is an example of a glazing according to the invention. Example 5 is similar to Example 4 but enables bluish coloration of both exterior and interior color. A side view of this glazing is depicted in Figure 8.

The glazing has the following arrangement of layers:
- a first glass layer of soda-lime Clear glass with a thickness of 2.1 mm,
- a solar control coating, comprising:
   - a dielectric layer of SiNx with a thickness of 65,9 nm,
   - a second electrically conductive layer (3.3) of NiCr with a thickness of 6,4 nm,
   - a first separation layer of NbOx with a thickness of 34,8 nm,
   - a first electrically conductive layer of NiCr with a thickness of 24,3 nm,
   - a color correction control layer of SiAl with a thickness of 6,4 nm,
   - a second separation layer of NbOx with a thickness of 58,3 nm,
   - a third electrically conductive layer of NiCr with a thickness of 10,5 nm,
   - a third separation layer of NbOx with a thickness of 47,1 nm,
   - a protective layer of SiOx with a thickness of 39,4 nm,
- a plastic bonding layer of clear PVB with a thickness of 0,76 mm,
- a second glass layer of soda-lime Clear glass with a thickness of 1,6 mm, and
- a low-E coating comprising:
   - a dielectric layer of SiOx with a thickness of 15,2 nm,
   - a transparent conductive oxide layer of ITO with a thickness of 146,8 nm, and
   - a protective layer of SiOx with a thickness of 87,8 nm.

The glazing of Example 5 has a visible light transmission (TL) of 2,8%, exterior reflectance (Rext) of 16%, interior reflectance (Rint) of 3,3% and total solar transmission (TTS) of 17,2%.

CIELAB color coordinates are:
CIELAB T(0°): L*=19.2; a*=-0.8; b*=-1.0
CIELAB Rₑₓₜ(0°): L*=47.1; a*=-7.2; b*=-0.5
CIELAB Rᵢₙₜ(0°): L*=21.1; a*=0.6; b*=-2.4

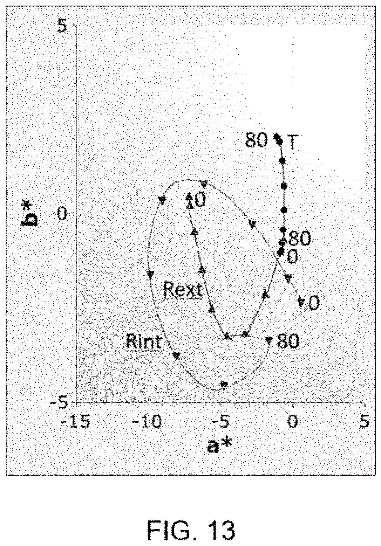

The angular dependence of the T, Rint, and Rext colors is depicted in Figure 13.

## Claims

1. A glazing (1) with solar control capabilities for a vehicle, the glazing (1) comprising:
- a first glass layer (2.1) having an outer major surface (2.1.1) and an inner major surface (2.1.2), wherein the outer major surface (2.1.1) is opposite to the inner major surface (2.1.2);
- a second glass layer (2.2) having an inner major surface (2.2.1) and an outer major surface (2.2.2), wherein the inner major surface (2.2.1) is opposite to the outer major surface (2.2.2);
- at least one plastic bonding layer (2.3) arranged between the inner major surface (2.1.2) of the first glass layer (2.1) and the inner major surface (2.2.1) of the second glass layer (2.2); and
- a solar control coating (3) arranged between the inner major surface (2.1.2) of the first glass layer (2.1) and the at least one plastic bonding layer (2.3), on at least one portion of the inner major surface (2.1.2) of the first glass layer (2.1);
wherein the solar control coating (3) comprises:
- a first electrically conductive layer (3.1) having a thickness in the range of 1 to 40 nm; the first electrically conductive layer (3.1) comprising any of the following materials: metal, metal alloy, semiconductor material or a combination thereof;
- a first separation layer (3.2) arranged between the first electrically conductive layer (3.1) and the first glass layer (2.1); the first separation layer (3.2) having an extinction coefficient of at least 0.01 and an optical thickness within the range of 0,3 to 1,9 times the quarter wavelength optical thickness of the material it is made of; and
- a second electrically conductive layer (3.3) arranged between the first glass layer (2.1) and the first separation layer (3.2); the second electrically conductive layer (3.3) having a thickness in the range of 1 to 30 nm; the second electrically conductive layer (3.3) comprising any of the following materials: metal, metal alloy or semiconductor material or a combination thereof; and
wherein the glazing (1) has a total solar transmission no greater than 21%.

2. The glazing (1) according to the preceding claim, wherein the solar control coating (3) further comprises a second separation layer (3.4) arranged between the first electrically conductive layer (3.1) and the at least one plastic bonding layer (2.3), wherein the second separation layer (3.4) has an optical thickness within the range of 0,45 to 1,65 times the quarter wavelength optical thickness of the material it is made of.

3. The glazing (1) according to the preceding claim, wherein the solar control coating (3) further comprises a third electrically conductive layer (3.5) arranged between the second separation layer (3.4) and the at least one plastic bonding layer (2.3), so that the second separation layer (3.4) is arranged between the first electrically conductive layer (3.1) and the third electrically conductive layer (3.5); wherein the third electrically conductive layer (3.5) has a thickness in the range of 1 to 30 nm, preferably in the range of 1 to 15 nm.

4. The glazing (1) according to any of the preceding claims, wherein the first (3.2) and/or second (3.4) separation layer has an optical thickness within the range of 0,45 to 1,65 times the quarter wavelength optical thickness of the material it is made of, preferably has an optical thickness within the range of 0,85 to 1,15 times the quarter wavelength optical thickness of the material it is made of, more preferably within the range of 0,90 to 1,10 times, and even more preferably within the range of 0,95 to 1,05 times the quarter wavelength optical thickness of the material it is made of.

5. The glazing (1) according to any of the preceding claims, having a total solar transmission no greater than 18%, and preferably no greater than 16%.

6. The glazing (1) according to any of the preceding claims, wherein the solar control coating (3) further comprises at least one dielectric layer (3.6, 3.7) arranged between the second electrically conductive layer (3.3) and the inner major surface (2.1.2) of the first glass layer (2.1).

7. The glazing (1) according to the preceding claim, wherein the at least one dielectric layer (3.6, 3.7) comprises one or more Si-based materials, such as SiNx, SiOx, SiOxNy, and/or a material selected from: ZnAlOx, NiCrOx, NbOx, TiOx, ZnSnOx, ZnTiOx, ZnZrOx, ZrTiOx, SiZrOx, SiZrTiOx, or any combination thereof.

8. The glazing (1) according to any of the preceding claims, further comprising a low-emissivity coating (4) arranged on the outer major surface (2.2.2) of the second glass layer (2.2).

9. The glazing (1) according to any of the preceding claims, wherein the first (3.1), second (3.3) and/or third (3.5) electrically conductive layer comprises a metal, an alloy and/or a semiconductor selected from the following list: NiCr, a Ni-based alloy, a Cr-based alloy, Al, Ti, an Al-based allow, a Ti-based alloy and their alloys and any combination thereof.

10. The glazing (1) according to any of the preceding claims, wherein the solar control coating (3) further comprises at least one color correction control layer (3.8), wherein:
- the at least one color correction control layer is arranged between the first separation layer (3.2) and the second electrically conductive layer (3.3) or between the first electrically conductive layer (3.1) and the second separation layer (3.4);
- the at least one color correction control layer has a thickness in the range of 1 to 10 nm; and/or
- the at least one color correction control layer comprises a material selected from the group comprising: SiAl, TiNx, and any combination thereof.

11. The glazing (1) according to any of the preceding claims, wherein the first (3.2) and/or second (3.4) separation layer comprises at least one of the following:
- a sub-oxidized dielectric material, such as SiOx, SiOxNy, NbOx, TiOx, SiTiOx, and SrTiOx,
- a sub-stoichiometric nitride, such as SiNx, and/or
- a semiconductor, such as NiCrOx, NiOx, Inconel, and ZrOx.

12. The glazing (1) according to any of the preceding claims, wherein the first glass layer (2.1) and/or the second glass layer (2.2) is alkali aluminosilicate glass, soda lima clear glass, soda lime ultra-clear glass, solar green glass or borosilicate glass.

13. The glazing (1) according to any of the preceding claims, wherein the at least one plastic bonding layer (2.3) comprises an infrared light protection composition and/or has a visible light transmission of at least 2%.

14. The glazing (1) according to any of the preceding claims, wherein the glazing is curved.

15. A roof, backlite, rear quarter, sidelite or sidedoor for a vehicle, comprising at least one glazing (1) according to any one of the preceding claims.

16. A vehicle comprising at least one glazing (1) according to any one of claims 1 to 14 or a roof, backlite, rear quarter, sidelite or sidedoor according to claim 15.
